# EUROPÄISCHE PATENTSCHRIFT

(11) **EP 1 913 096 B1**
(45) Veröffentlichungstag und Bekanntmachung des Hinweises auf die Patenterteilung: **31.12.2008**
(21) Anmeldenummer: 06777911.6
(22) Anmeldetag: 21.07.2006
(51) Int. Cl.: C09D 4/00, C09D 161/00, C08F 299/02

(54) **STRAHLENHÄRTBARES BINDEMITTEL**
RADIATION-CURABLE BINDER
LIANT RADIODURCISSABLE

(30) Priorität: 28.07.2005 DE 102005035980
(43) Veröffentlichungstag der Anmeldung: 23.04.2008
(73) Patentinhaber: BASF SE, 67056 Ludwigshafen (DE)
(72) Erfinder: MARTIN-PORTUGUES, Marta, 67071 Ludwigshafen (DE); SCHNEIDER, Jörg, B-1970 Wezembeek-Oppern (BE); SCHERR, Günter, 67065 Ludwigshafen (DE); REIF, Martin, 67354 Römerberg (DE); PAULUS, Wolfgang, 55270 Ober-Olm (DE); LARBIG, Harald, 67059 Ludwigshafen (DE)
(86) Internationale Anmeldenummer: PCT/EP2006/064550
(87) Internationale Veröffentlichungsnummer: WO 2007/012619

(56) Entgegenhaltungen:
- GB-A- 1 562 243
- US-A- 4 851 460
- US-A1- 2003 119 980

## Beschreibung

Die vorliegende Erfindung betrifft ein strahlenhärtbares Bindemittel, erhältlich durch Umsetzung von A) Amin-Formaldehyd-Kondensaten mit einem Molverhältnis von Formaldehyd zu Aminogruppen von 1:6 bis 2:1 mit B) einer Mischung aus Butandiolmonoacrylat und 2-Hydroxyethylmethacrylat in einem Verhältnis von 0,1:100 bis 100:0,1, wobei pro Methyloläquivalent der Komponente A) 0,1 bis 1,5 Hydroxyäquivalente der Komponente B) verwendet werden. Die vorliegende Erfindung betrifft ferner härtbare Überzugsmassen, die das erfindungsgemäße Bindemittel enthalten und beschichtete Gegenstände, die unter Verwendung der Überzugsmassen hergestellt wurden.

Es ist allgemein bekannt, dass Bindemittel, die monoolefinisch ungesättigte Gruppen wie beispielsweise Acrylatgruppen tragen, durch energiereiche Strahlung gehärtet werden können.

Solche Bindemittel können bei der Herstellung von Überzugsmassen verwendet werden.

Dabei wird die Strahlenhärtung häufig nur zur schnellen Anhärtung benutzt, um zu verhindern, dass die beschichteten Gegenstände aneinanderkleben, was besonders bei der Massenproduktion von beschichteten Gegenständen von Bedeutung ist.

DE-A 17 45 540 offenbart ein Verfahren zur Herstellung von selbstvernetzenden Copolymerisaten durch Polymerisation von monomeren Umsetzungsprodukten aus Polymethylolmelamin und Verbindungen des Acrylsäure- bzw. Maleinsäuretyps mit anderen ethylenisch ungesättigten Monomeren. Als Acrylsäuretypen werden Acrylsäure, Acrylsäureethyester, Acrylsäurebutylester, Acrylsäuremonoethylenglykolester, Methacrylsäure, Methacrylsäuremonoethylenglykolester und Methacrylsäuremonopropylenglykolester offenbart. Die beschriebenen Umsetzungsprodukte werden beispielsweise in der Lack-Industrie für die Herstellung von Überzügen verwendet.

Aus der DE-A 25 50 740 sind strahlungshärtbare Überzugsmassen bekannt, die als Bindemittel (meth)-acrylgruppentragende Aminoplastharze enthalten. Diese Überzugsmassen enthalten jedoch größere Mengen an freien (Meth)acrylatmonomeren, was bei der Verarbeitung zu Problemen bezüglich der Umweltbelastung einerseits und der anwendungstechnischen Eigenschaften andererseits führt. Überzugsmassen mit einem Gehalt von mehr als 1 Gew.-% Restmonomeren sind kennzeichnungspflichtig.

EP-B 464 466 beschreibt Umsetzungsprodukte aus der Reaktion von A) Amin-Formaldehyd-Kondensaten mit B) mindestens eine frei Hydroxylgruppe aufweisende Estern der Acrylsäure oder der Methacrylsäure mit Polyalkoholen, die zwei bis vier alkoholische Hydroxylgruppen enthalten, in Gegenwart von Säuren mit einem pK-Wert < 3,0 als Katalysator unter Abdestillieren flüchtiger Reaktionsprodukte unter vermindertem Druck, wobei pro Methyloläquivalent der Komponente A) 0,1 bis 0,3 Hydroxyäquivalente der Komponente B) verwendet werden. Als Komponente B) sind beispielsweise Hydroxyethylacrylat, Hydroxypropylacrylat, Hydroxylhexylacrylat, Glycerindiacrylat, Pentaerythrittiacrylat genannt; besonders wird Butandiolmonoacrylat bevorzugt. Nachteilig an der Komponente Butandiolmonocrylat ist deren starken Eigengeruch und die vergleichsweise hohe Toxizität.

Die Aufgabe der vorliegenden Erfindung war es demnach, strahlenhärtbare Bindemittel für Überzugsmassen zur Verfügung zu stellen, die nur einen schwachen Eigengeruch und eine geringe Toxizität aufweisen und dennoch den üblichen Qualitätsmerkmalen gerecht werden. Insbesondere sollten die strahlenhärtbaren Bindemittel ferner eine Viskosität von nicht größer als 3500 mPas aufweisen, eine hohe Reaktivität von mindestens 10 m/s und eine gute Wasser- und Chemikalienbeständigkeit.

Demnach wurde ein strahlenhärtbares Bindemittel gefunden, das durch Umsetzung von A) Amin-Formaldehyd-Kondensaten mit einem Molverhältnis von Formaldehyd zu Aminogruppen von 1:6 bis 2:1, bevorzugt 1:4 bis 2:1, insbesondere 1:1 bis 2:1, mit B) einer Mischung aus Butandiolmonbacrylat und 2-Hydroxyethylmethacrylat in einem Verhältnis von 0,1:100 bis 100:0,1, wobei pro Methyloläquivalent der Komponente A) 0,1 bis 1,5 Hydroxyäquivalente der Komponente B) verwendet werden, erhältlich ist.

Als Komponenten A) werden Kondensationsprodukte aus Formaldehyd und Aminoplastbildnern umgesetzt, wobei als Aminoplastbildner aminogruppenhaltige Verbindungen wie beispielsweise Harnstoff, Melamin, Benzoguanamin, Acetoguanamin, Acetylendiharnstoff, Ethylenharnstoff oder Propylenharnstoff in Betracht kommen. Die Herstellung der Kondensate kann nach dem Fachmann bekannten Verfahren in schwach alkalischen Medien erfolgen, wobei je nach Reaktionsbedingungen nieder- oder höherkondensierte Produkte entstehen können. Vorzugsweise wird Hexamethylolmelamin verwendet.

Nach einer bevorzugten Ausführungsform können die Kondensate A) in partiell oder vollständig mit C₁ bis C₆ -Monoalkoholen veretherter Form vorliegen. Die Veretherung kann nach bekannten Verfahren im sauren Medium durchgeführt werden. Als Alkohole werden vorzugsweise Methanol, aber auch Isobutanol, Butanol oder Gemische aus methanol mit Isobutanol oder Butanol verwendet. Als veretherte Komponente A) wird vorzugsweise Hexamethoxymethylmelamin verwendet.

Als Komponente B) kommt vorteilhaft eine Mischung aus Butandiolmonoacrylat und 2-Hydroxyethylmethacrylat in einem Verhältnis von 1:50 bis 50:1, bevorzugt 1:7 bis 7:1, besonders bevorzugt 1:4 bis 5:1, insbesondere 1:1 bis 4:1.

Die Menge an B) wird so bemessen, dass pro Methyloläquivalent der Komponente A) 0,1 bis 1,5 Hydroxyläquivalente der Komponente B), bevorzugt 0,2 bis 1, insbesondere 0,4 bis 0,9, verwendet werden.

Zusätzlich können noch 0,02 bis 0,4 Gew.-%, bezogen auf die Menge der Komponente B), eines Polymerisationsinhibitors C) zugesetzt werden, wodurch die Selbstpolymerisation der Komponete B) verhindert werden kann. Als Inhibitoren eignen sich beispielsweise Hydrochinon, Hydrochinonmonoalkylether, 2,5-Di-tert.-butyl-4-methylphenol oder Phenothiazin.

Die Umsetzung von A) mit B) erfolgt vorteilhaft in Gegenwart katalytischer Mengen von organischen oder anorganischen Säuren. Die Säuren weisen vorteilhaft einen pH-Wert < 3,0 auf. Als Säuren kommen beispielsweise Salzsäure, Schwefelsäure, Oxalsäure, Maleinsäure, Phthalsäure oder para-Toluolsulfonsäure in Betracht. Üblicherweise werden pro Methyloläquivalent der Komponente A) 1 mVal bis 30 mVal Säure eingesetzt.

Die Umsetzung kann vorteilhaft bei Temperaturen von 50 bis 150°C, vorzugsweise 60 bis 120°C, durchgeführt werden.

Durch das Arbeiten bei vermindertem Druck von 0,01 bis 0,25 bar, vorzugsweise 0,05 bis 0,15 bar, können während der Reaktion flüchtige Bestandteile des Reaktionsgemisches abdestilliert werden.

Die Reaktion kann durch Neutralisation der Säure mit Basen wie wässriger Natronlauge oder Alkylaminen wie beispielsweise Triethylamin, Tributylamin oder Alkanolaminen wie Dibutylethanolamin, Diethanolamin oder Triethanolamin beendet werden, wobei der Endpunkt so gewählt wird, dass die Neutralisation dann erfolgt, wenn mindestens 90 Gew.-% des theoretisch entstehenden Methanols abdestilliert sind.

Nach Beendigung der Reaktion erfolgt möglicherweise eine weitere Destillation bei ca. 50 bis 100 mbar, um noch Restmengen an flüchtigen Komponenten möglichst weitgehend zu entfernen.

Man erhält die erfindungsgemäßen Bindemittel als klare, farblose bis schwach gelbgefärbte viskose Harze mit einer Viskosität von ca. 1500 bis 5000 mPas (23°C) mit einem Gehalt an freier Komponente B der in der Regel unter 5 Gew.-% liegt. Die erfindungsgemäßen Bindemittel weisen eine Härte von 90 bis 110 Ausschlägen des Pendelarms (siehe Beispiel) auf. Ferner weisen die erfindungsgemäßen Bindemittel nur einen schwachen Geruch auf. Die Viskosität, die Reaktivität und die Wasserbeständigkeit der erfindungsgemäßen Bindemittel entspricht den üblichen Anforderungen (siehe Tabelle 3).

Die erfindungsgemäßen Harze eignen sich hervorragend als Bindemittel für strahlungshärtbare Überzugsmassen, wobei die Harze in Mengen von 10 bis 100 Gew.-%, bezogen auf gesamte Harzmasse, verwendet werden. Niedrigviskose Harze mit einer Viskosität von 1000 bis 3500 mPas stellen für sich schon brauchbare Überzugsmassen dar. Höherviskose Harze mit einer Viskosität > 3500 mPas können in der Regel nur mit flüssigen copolymerisierbaren organischen Verbindungen ("Reaktiwerdünner") verdünnt werden, wobei üblicherweise 0 bis 60 Gew.-%, bezogen auf die Überzugsmasse, an Reaktiwerdünner verwendet werden. Als geeignete Reaktiwerdünner kommen beispielsweise Butandioldiacrylat, Hexandioldiacrylat, Trimethyloldiacrylat, Trimethylolpropantriacrylat oder Tripropylenglycoldiacrylat in Betracht.

Neben den erfindungsgemäßen Harzen können die Überzugsmassen noch 0 bis 90 Gew.-% an weiteren photopolymerisierbaren Bindemitteln wie beispielsweise Polyesteracrylate, Polyetheracrylate, Polyurethanacrylate oder acrylatmodifizierte Epoxidharze enthalten.

Zusätzlich können den Überzugsmassen noch bis zu 30 Gew.-% an Lösungsmitteln, wie sie für Lackanwendungen üblich sind, enthalten, beispielsweise Aromaten, Ester, Ketone, Alkohole oder Gemische solcher Lösungsmittel.

Die Lösungsmittel müssen vor der Strahlungshärtung jedoch weitgehendst entfernt werden. Weiterhin können noch konventionelle Lackbindemittel wie beispielsweise Polyesterharze, Alkydharze, Polyacrylatharze sowie Lackvemetzer wie beispielsweise Aminoharze, Isocyanate oder Epoxidharze in Mengen bis zu 30 Gew.-% zugesetzt werden.

Die Überzugsmassen können außerdem noch 0 bis 80 Gew.-% an Pigmenten, wie sie für lacktechnische Anwendungen geeignet sind, enthalten.

Ferner können noch übliche Hilfsmittel wie Thixotropiermittel, Verlaufsmittel, Mattierungsmittel, Entlüftungsmittel oder Gleitmittel in Mengen bis zu 10 Gew.-% verwendet werden.

Die Aushärtung kann entweder mit Hilfe von Elektronenstrahlen mit einer Energie von 100 bis 400 kV und einer Dosis von 0,5 bis 10 Mrad oder durch UV-Licht mit einer Wellenlänge von 220 bis 450 nm und einer Dosis von 20 bis 1000 mJ/cm³ erfolgen. Bei der Aushärtung mit UV-Licht werden dem Überzugsmassen zweckmäßigerweise Photoinitiatoren wie Benzildimethylketal, Benzophenon, oder Acylphosphinoxiden, gegebenenfalls zusammen mit Coinitiatoren wie z.B. Dimethylethanolamin, in Mengen von 0,5 bis 10 Gew.-% zugesetzt.

Zusätzlich zur Strahlenhärtung kann eine Aushärtung durch Trocknen bzw. Einbrennen bei 30 bis 200°C oder durch Säurekatalyse erfolgen, wobei als saure Katalysatoren Verbindungen wie beispielsweise p-Toluolsulfonsäure, Maleinsäure oder Phosphorsäure in Mengen von 0,2 bis 10 Gew.-% zugegeben werden können.

Eine solche zusätzliche Härtung empfiehlt sich vor allem auch bei stark pigmentierten Überzugsmassen, aber auch bei der Beschichtung von anspruchsvoll strukturierten Formkörpern wie beispielsweise Stühlen oder anderen Bedarfsgegenständen, bei denen nicht gewährleistet ist, dass die Strahlung die gesamte zu härtende Oberfläche erfasst.

Die erfindungsgemäßen Überzugsmassen eignen sich zum Beschichten von Holz, Metall, Papier oder Kunststoff.

Die Beschichtungen weisen eine gute Beständigkeit gegen mechanische Beanspruchungen auf.

Besonders vorteilhaft wirkt sich bei den erfindungsgemäßen Bindemitteln deren schwacher Eigengeruch und deren vergleichsweise geringe Toxizität aus.

### Beispiele

### Beispiel 1:

Ein Gemisch aus 390 g (1 mol) Hexamethoxymethylmelamin, 158 g (1,13 mol) einer Mischung aus Butandiolmonoacrylat (122 g, 0,85 mol) und 2-Hydroxyethylmethacrylat (36 g, 0,28 mol), 0,2 g (0,9 mol), 2,5-Di-tert.-butyl-4-methylphenol und 2 g (11 mmol) p-Toluolsulfonsäure wurde auf 90°C erhitzt. Anschließend wurden während einer Zeitspanne von 30 min bei einer Temperatur von 80°C und einem Druck von 0,11 bis 0,14 bar ca. 45 g leichtflüchtige Bestandteile in eine Kühlfalle abdestilliert. Dann wurde das Reaktionsgemisch mit Tributylamin neutralisiert und anschließend einer weiteren Destillation bei 110°C und 0,07 bis 0,1 bar unterworfen, wobei noch 5 g an flüchtigen Bestandteilen abdestilliert wurden. Aus dem Destillationsrückstand wurden durch Filtration 510 g eines Harzes mit einer Viskosität von ca. 3200 mPas (23°C) erhalten.

### Vergleichsbeispiel (gemäß EP-B 464 466):

Ein Gemisch aus 390 g (1 mol) Hexamethoxymethylmelamin, 163 g (1,13 mol) Butandiolmonoacrylat, 0,2 g (0,9 mol), 2,5-Di-tert.-butyl-4-methylphenol und 2 g (11 mmol) p-Toluolsulfonsäure wurde auf 90°C erhitzt. Anschließend wurden während einer Zeitspanne von 30 min bei einer Temperatur von 80°C und einem Druck von 0,11 bis 0,14 bar ca. 45 g leichflüchtige Bestandteile in eine Kühlfalle abdestilliert. Dann wurde das Reaktionsgemisch mit Tributylamin neutralisiert und anschließend einer weiteren Destillation bei 110°C und 0,07 bis 0,1 bar unterworfen, wobei noch 5 g an flüchtigen Bestandteilen abdestilliert wurden. Aus dem Destillationsrückstand wurden durch Filtration 510 g eines Harzes mit einer Viskosität von ca. 5 Pas (23°C) erhalten.

### Verarbeitungsbeispiele:

Je 100 g des nach Beispiel 1 und nach dem Vergleichsbeispiel erhaltenen Harzes wurden mit 4 g Benzildimethylketal versehen und mit 12 g Butylacetat verdünnt, so dass die Viskosität des Gemisches 2900 Pas (23°C) betrug. Der so erhaltene Lack wurde mit einer Nassfilmdicke von 25 µm auf ein zinkphosphatiertes Stahlblech aufgerakelt und nach zweiminütigem Ablüften zur Aushärtung mit einer Bandgeschwindigkeit von 5 m/min unter einer Quecksilberhochdruckröhre mit einer Leistung von 80 Watt/cm durchgefahren. Der schon nach Belichten nagelharte, glänzende Film wurde anschließend 20 min bei 170°C eingebrannt.
Die anwendungstechnischen Daten sind in Tabelle 3 aufgelistet.

### Anwendungstechnische Prüfungen:

### Viskosität:

Die Viskosität wurde nach DIN EN ISO 3219 bestimmt.

### Pendeldämpfung:

Die Pendeldämpfung wurde in Orientierung an die DIN 53157 bestimmt, in dem die auf einer Glasplatte UV-gehärteten Filme direkt nach der UV-Härtung 24 Stunden bei Normalklima gelagert und anschließend nach DIN 53157 gependelt wurden.

### Reaktivität:

Es wurde die maximale Geschwindigkeit ermittelt, bei welcher ein unmittelbar zuvor applizierter flüssiger Lackfilm durch UV-Strahlung ausgehärtet wurde und eine kratzfeste, klebfreie Oberfläche ergab.

### Wasserbeständigkeit:

Die Wasserbeständigkeit wurde nach DIN 68861 bestimmt, in dem der Lackfilm mit einem in Wasser getränktem Wattebausch belastet und mit einer Glasschale abgedeckt wurde. Nach 24 Stunden bei Raumtemperatur wurde der Wattebausch entfernt, die Fläche abgetrocknet und nach der folgenden Skala in der untenstehenden Tabelle geurteilt.

**Tabelle 1**

| | | | | | unterm |
|---|---|---|---|---|---|
| Note | Aussehen | Blasen | Daumentest | Messertest | Lackfilm |
| 0 | Keine Veränderung | | | | |
| 1 | Minimale Veränderung | | | | |
| 2 | | sehr kleine Bläschen | kratzfest | Haftungsver lust, gerader Schnitt | trocken |
| 2,5 | | sehr kleine Bläschen | kratzfest | Haftungsver lust, Lack platzt ab | trocken |
| 3 | | kleine Bläschen | mit Daumennagel spröde abzukratzen | | trocken |
| 4 | | Bläschen | mit Daumennagel vom Glas wegzuschieben | | nass |
| 5 | weiß | aufgequollene Blasen | weich | | nass |

### Geruch von UV-härtbaren Bindemitteln:

In einer 200ml braunen Glasflasche wurden 100g Bindemittel eingewogen. Die Flasche wurde verschlossen und 24 Stunden stehen gelassen. Der Geruch wurde direkt nach dem Öffnen der Flasche von 6 Versuchspersonen nach einer Notenskala von 0 bis 5 bewertet, die Ergebnisse sind in der folgenden Tabelle 2 dargestellt. Als Nullwert diente eine Flasche mit destilliertem Wasser.

**Tabelle 2**

| | Beispiel 1, erfindungsgemäß | Vergleichsbeispiel |
|---|---|---|
| | (Bindemittel:Butandiolmonoacrylat: | (Bindemittel:Butandiol- |
| | 2-Hydroxyethylmethacrylat | monoacrylat |
| | im Verhältnis 1:3:1) | im Verhältnis 1:4) |
| Versuchsperson 1 | 1 | 3 |
| Versuchsperson 2 | 1 | 3 |
| Versuchsperson 3 | 3 | 5 |
| Versuchsperson 4 | 1 | 4 |
| Versuchsperson 5 | 1 | 2 |
| Versuchsperson 6 | 2 | 2 |

**Tabelle 3: Anwendungstechnische Daten**

| Beispiel | Beispiel 1 | Vergleichsbeispiel |
|---|---|---|
| | erfindungsgemäß | |
| Viskosität [mPas] | 2900 | 2400 |
| Pendeldämpfung [Ausschläge des Pendelarms] | 98 | 120 |
| Reaktivität [m/s] | 15 | 15 |
| Wasserbeständigkeit | 1 | 1 |
| Mittlere Geruchsbewertung | 1,5 | 3,2 |

## Patentansprüche

1. Strahlenhärtbares Bindemittel, erhältlich durch Umsetzung von
A) Amin-Formaldehyd-Kondensaten mit einem Molverhältnis von Formaldehyd zu Aminogruppen von 1:6 bis 2:1 mit
B) einer Mischung aus Butandiolmonoacrylat und 2-Hydroxyethylmethacrylat in einem Verhältnis von 0,1:100 bis 100:0,1, wobei pro Methyloläquivalent der Komponente A) 0,1 bis 1,5 Hydroxyäquivalente der Komponente B) verwendet werden.

2. Strahlenhärtbares Bindemittel nach Anspruch 1, erhältlich unter Verwendung einer Mischung aus Butandiolmonoacrylat und 2-Hydroxyethylmethacrylat in einem Verhältnis von 1:7 bis 7:1 als Komponente B).

3. Strahlenhärtbares Bindemittel nach Anspruch 1 oder 2, erhältlich unter Verwendung eines Polymerisationsinhibitors C) in Mengen von 0,02 bis 0,4 Gew.%, bezogen auf B).

4. Strahlungshärtbares Bindemittel nach den Ansprüchen 1 bis 3, erhältlich unter Verwendung einer Komponente A), deren Methylolgruppen partiell oder vollständig mit C₁ bis C₆ -Monoalkoholen verethert sind.

5. Strahlungshärtbares Bindemittel nach einem der Ansprüche 1 bis 4, erhältlich unter Verwendung von Hexamethoxymethylmelamin als Komponente A).

6. Verfahren zur Herstellung eines strahlenhärtbaren Bindemittels gemäß der Ansprüche 1 bis 5, in welchem man
A) Amin-Formaldehyd-Kondensate mit einem Molverhältnis von Formaldehyd zu Aminogruppen von 1:6 bis 2:1 mit B) einer Mischung aus Butandiolmonoacrylat und 2-Hydroxyethylmethacrylat in einem Verhältnis von 0,1:100 bis 100:0,1, in Gegenwart von Säure als Katalysator unter Abdestillieren leicht flüchtiger Reaktionsprodukte bei vermindertem Druck umsetzt, und das **dadurch gekennzeichnet ist, dass** pro Methyloläquivalent der Komponente A) 0,1 bis 1,5 Hydroxyäquivalente der Komponente B) verwendet werden.

7. Härtbare Überzugsmassen, enthaltend 10 bis 100 Gew.-% eines Bindemittels gemäß einem der Ansprüche 1 bis 5.

8. Beschichteter Gegenstand, erhältlich unter Verwendung von härtbaren Überzugsmassen nach Anspruch 7.

## Claims

1. A radiation-curable binder obtainable by reacting
A) amine-formaldehyde condensates with a molar ratio of formaldehyde to amino groups of 1:6 to 2:1 with
B) a mixture of butanediol monoacrylate and 2-hydroxyethyl methacrylate in a ratio of 0.1:100 to 100:0.1, using 0.1 to 1.5 hydroxy equivalents of component B) per methylol equivalent of component A).

2. The radiation-curable binder according to claim 1, obtainable using a mixture of butanediol monoacrylate and 2-hydroxyethyl methacrylate in a ratio of 1:7 to 7:1 as component B).

3. The radiation-curable binder according to claim 1 or 2, obtainable using a polymerization inhibitor C) in amounts of 0.02% to 0.4% by weight, based on B).

4. The radiation-curable binder according to any of claims 1 to 3, obtainable using a component A) some or all of whose methylol groups are etherified with C₁ to C₆ monoalcohols.

5. The radiation-curable binder according to any one of claims 1 to 4, obtainable using hexamethoxymethylmelamine as component A).

6. A process for preparing a radiation-curable binder according to claims 1 to 5, which involves reacting
A) amine-formaldehyde condensates with a molar ratio of formaldehyde to amino groups of 1:6 to 2:1 with B) a mixture of butanediol monoacrylate and 2-hydroxyethyl methacrylate in a ratio of 0.1:100 to 100:0.1 in the presence of acid as catalyst and with distillative removal of volatile reaction products under reduced pressure, and which comprises using 0.1 to 1.5 hydroxy equivalents of component B) per methylol equivalent of component A).

7. A curable coating composition comprising 10% to 100% by weight of a binder according to any one of claims 1 to 5.

8. A coated article obtainable using a curable coating composition according to claim 7.

## Revendications

1. Liant durcissable par rayonnements, qui peut être obtenu par réaction de
A) condensats amine-formaldéhyde avec un rapport molaire entre les groupements formaldéhydes et les groupements amino de 1:6 à 2:1 avec
B) un mélange de monoacrylate de butane diol et de méthacrylate de 2-hydroxyéthyle en un rapport de 0,1:100 à 100:0,1, 0,1 à 1,5 équivalents hydroxy du composant B) étant utilisés par équivalent méthylol du composant A).

2. Liant durcissable par rayonnements selon la revendication 1, qui peut être obtenu en utilisant un mélange de monoacrylate de butane diol et de méthacrylate de 2-hydroxyéthyle en un rapport de 1:7 à 7:1 en tant que composant B).

3. Liant durcissable par rayonnements selon la revendication 1 ou 2, qui peut être obtenu en utilisant un inhibiteur de polymérisation C) en quantités de 0,02 à 0,4 % en poids par rapport à B).

4. Liant durcissable par rayonnements selon les revendications 1 à 3, qui peut être obtenu en utilisant un composant A) dont les groupements méthylol sont partiellement ou totalement éthérifiés par des monoalcools en C₁ à C₆.

5. Liant durcissable par rayonnements selon l'une quelconque des revendications 1 à 4, qui peut être obtenu en utilisant de l'hexaméthoxyméthylmélamine en tant que composant A).

6. Procédé d'utilisation d'un liant durcissable par rayonnements selon les revendications 1 à 5, selon lequel on met en réaction
A) des condensats amine-formaldéhyde avec un rapport molaire entre les groupements formaldéhydes et les groupements amino de 1:6 à 2:1 avec B) un mélange de monoacrylate de butane diol et de méthacrylate de 2-hydroxyéthyle en un rapport de 0,1:100 à 100:0,1, en présence d'acide en tant que catalyseur et avec élimination par distillation des produits de réaction facilement volatils à pression réduite, **caractérisé en ce que** l'on utilise 0,1 à 1,5 équivalents hydroxy du composant B) par équivalent méthylol du composant A).

7. Matières durcissables pour revêtement qui contiennent 10 à 100 % en poids d'un liant selon l'une quelconque des revendications 1 à 5.

8. Article enduit qui peut être obtenu en utilisant des matières durcissables pour revêtement selon la revendication 7.
